# EUROPEAN PATENT SPECIFICATION

(11) **EP 2 139 098 B1**
(45) Date of publication and mention of the grant of the patent: **31.05.2017**
(21) Application number: 09163213.3
(22) Date of filing: 19.06.2009
(51) Int. Cl.: H02K 3/52, H02K 15/00, H02K 15/12

(54) **Terminal for brushless motor and method for insert molding the same**
Anschlussklemmenvorrichtung für einen bürstenlosen Motor und dessen Einsatzformverfahren
Dispositif de borne de moteur sans balai et son procédé de moulée par insertion

(30) Priority: 27.06.2008 JP 2008169118
(43) Date of publication of application: 30.12.2009
(73) Proprietor: Sugiyama Seisakusho Co., LTD., Tokyo (JP)
(72) Inventor: Ochiai, Atsumi, Tokyo (JP)
(74) Representative: Grünecker Patent- und Rechtsanwälte PartG mbB

(56) References cited:
- JP-A- H10 145 941
- US-A1- 2008 018 193

## Description

### BACKGROUND OF THE INVENTION

### 1. FIELD OF THE INVENTION

The present invention relates to a method for insert molding a terminal (concentrated power distribution member) used for a brushless motor and also relates to a terminal for a brushless motor. Specifically, the present invention relates to an insert molding method capable of integrating multiple balance rings, each previously formed in a ring shape, with a mold resin in a state where the balance rings are accurately positioned and held in an axial direction, and also relates to a terminal obtained by the integration through the insert molding method.

### 2. DESCRIPTION OF THE RELATED ART

As disclosed in Japanese Patent Application Publication Nos. 2008-29138 and 2003-134728, a terminal for a brushless motor such as a DC brushless motor is manufactured by stacking ring-shaped bus rings of U, V and W phases and a ring-shaped neutral bus ring in an axial direction and integrating the bus rings with a mold resin in a state where the bus rings are held at appropriate intervals.

JP 10145941 discloses circuit patterns which are spaced a part by helding pins with stepped portions penetrating positioning holes of corresponding circuit patterns.

Japanese Unexamined Patent Application Publication No. 2008-29138 describes that the multiple bus rings are integrated with a mold resin by setting the multiple bus rings as an insert in a mold in a state where the bus rings are stacked at appropriate intervals in the axial direction and then by performing insert molding. However, Japanese Unexamined Patent Application Publication No. 2008-29138 includes no description about accurately maintaining the intervals between the multiple bus rings in the mold.

Specifically, when molding is performed by setting the multiple bus rings at the appropriate intervals as the insert in the mold, positions of the bus rings might be changed by the flow of the mold resin injected into the mold. Thus, it is preferable that the intervals between the multiple bus rings are accurately maintained even when the mold resin is injected into the mold.

In Japanese Patent Unexamined Application Publication No. 2003-134728, it is described that molding is performed in a state where bus rings are engaged with multiple holding grooves formed in the circumferential surface of an insulating holder. This configuration makes it possible to accurately maintain intervals between the bus rings since the bus rings are engaged with the holding grooves of the insulating holder. However, since the configuration requires the insulating holder, the configuration has a problem of using the increased number of components and of requiring the bus rings to be engaged with the holding grooves of the insulating ring.

### Summary of the invention

A first aspect of the present invention is a method for insert molding a terminal for a brushless motor, according to claim 1.

The holding pins may be inserted into the positioning holes of the bus rings in a manner that insertion directions of each adjacent two of the holding pins are opposite to each other with respect to the bus rings.

The method may further comprise: preparing auxiliary pins respectively facing the tips of the holding pins, and the bus rings may be integrated with the mold resin in a state where both front and back surfaces of at least one of the bus rings are sandwiched between each facing pair of the auxiliary pins and the tips of the holding pins.

The auxiliary pins may be provided to an insert molding mold.

The holding pins may be provided to an insert molding mold.

The holding pins and the auxiliary pins may be provided to any one of a first fixed mold and a second movable mold of an insert molding mold.

A second aspect of the present invention is a terminal for a brushless motor according to claim 7.

The bus rings may be stacked by inserting the holding pins into the positioning holes of the bus rings in a manner that insertion directions of each adjacent two of the holding pins are opposite to each other with respect to the bus rings.

Auxiliary pins respectively facing the tips of the holding pins may be prepared, and the bus rings may be integrated with the mold resin in a state where both front and back surfaces of at least one of the bus rings are sandwiched between each facing pair of the auxiliary pins and the tips of the holding pins.

The auxiliary pins may be provided to an insert molding mold.

The holding pins may be provided to an insert molding mold.

The holding pins and the auxiliary pins may be provided to any one of a first fixed mold and a second movable mold of an insert molding mold.

According to the above method and configuration of the present invention, the bus rings are positioned and held at the predetermined positions by the positioning step portions provided to the holding pins. Thus, the positions of the bus rings are not displaced by the flow of the mold resin injected into the mold in performing molding. This allows insert molding to be performed with the intervals between the bus rings accurately maintained.

### BRIEF DESCRIPTION OF THE DRAWINGS

FIG. 1 is a perspective explanatory view of a terminal for a brushless motor according to an embodiment of the present invention.
FIG. 2 is a perspective explanatory view showing configurations of various bus rings according to the embodiment of the present invention.
FIG. 3 is a perspective explanatory view showing a stacked state of the various bus rings according to the embodiment of the present invention.
FIG. 4 is an explanatory view showing a state where the bus rings are set as an insert in an insert molding mold.
FIG. 5 is an explanatory view showing a modified example of the embodiment of the present invention shown in FIG. 4.

### DETAILED DESCRIPTION OF THE EMBODIMENT

With reference to the drawings, an embodiment of the present invention will be described below.

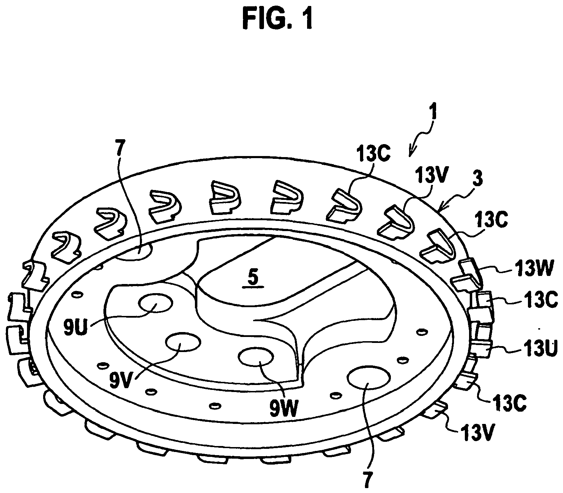

As shown in FIG. 1, a terminal 1 for a brushless motor according to an embodiment of the present invention includes a terminal main body 3 formed of a mold resin so as to have a circular outer peripheral surface. In a center portion of the terminal main body 3, a through-hole 5 is formed, through which a rotor in a brushless motor (not shown) freely passes. At symmetric positions about the axial center of the terminal main body 3, there are formed mounting holes 7 for attaching the terminal main body 3 to a housing (not shown) of the brushless motor with attachment parts such as mounting screws.

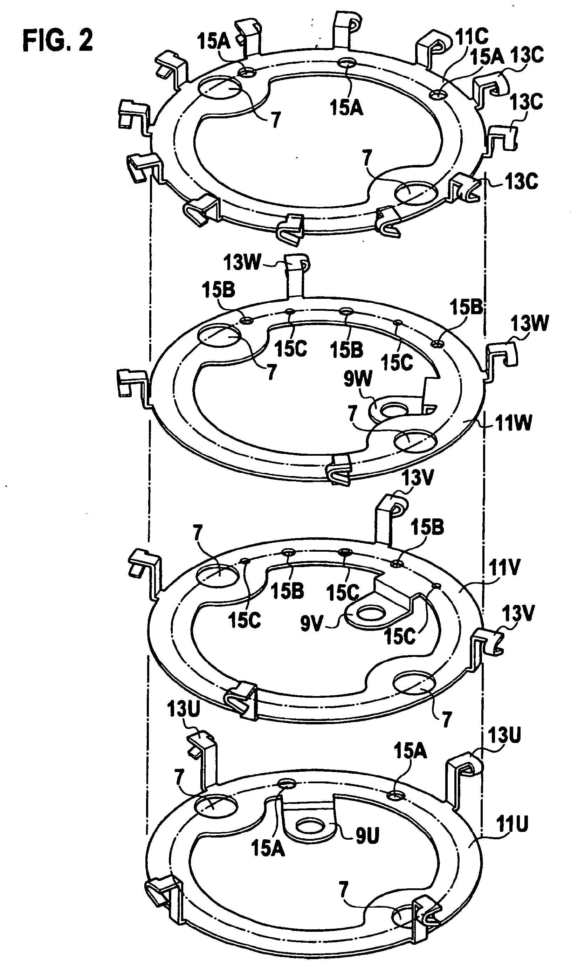

The terminal main body 3 includes terminal fixing portions 9U, 9V and 9W to which connection terminals connected to U, V and W phases are to be fixed with screws, respectively. Moreover, connection terminals 13U, 13V and 13W to be connected to a stator coil (drive coil) included in the motor are provided so as to protrude from the outer peripheral surface of the terminal main body 3. Specifically, the connection terminals 13U, 13V and 13W are provided, respectively, to a U-phase bus ring 11U, a V-phase bus ring 11V and a W-phase bus ring 11W (see FIG. 2), which are buried in the terminal main body 3. Moreover, connection terminals 13C provided in a neutral bus ring 11C protrude from the outer peripheral surface of the terminal main body 3.

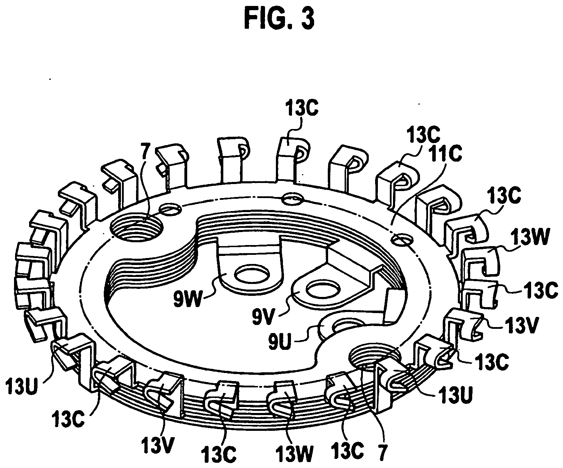

To manufacture the terminal 1 having the above configuration, as heretofore known, each of the bus rings 11U, 11V, 11W and (the neutral bus ring) 11C is previously formed in a ring shape by pressing or the like. Moreover, the terminal fixing portions 9U, 9V and 9W and the connection terminals 13U, 13V, 13W and 13C, which are provided to the bus rings 11U, 11V, 11W and 11C, are bent into required shapes. Thereafter, the bus rings 11U, 11V, 11W and 11C are stacked in an axial direction as shown in FIG. 3 and then mounted (set) as an insert in a molding mold (not shown) with intervals therebetween maintained at a previously set predetermined interval. Subsequently, a mold resin is injected into the molding mold so as to insert mold the terminal 1 having the bus rings 11U, 11V, 11W and 11C integrated with the mold resin.

In the neutral bus ring 11C stacked at the top or bottom when the multiple bus rings 11U, 11V, 11W and 11C are stacked, large-diameter positioning holes 15A are formed concyclically at a uniform pitch (for example, a pitch P). Moreover, intermediate-diameter positioning holes 15B are formed at the uniform pitch in portions of the next bus ring 11W disposed on the neutral bus ring 11C, the portions corresponding to the positioning holes 15A in the neutral bus ring 11C. At an intermediate position, namely, at a 1/2 pitch position, between each adjacent two of the positioning holes 15B, a small-diameter positioning hole 15C is formed. Specifically, the small-diameter positioning holes 15C and the intermediate-diameter positioning holes 15B are alternately provided and the pitch therebetween is at 1/2 of the pitch for the large-diameter positioning holes 15A.

The bus ring 11V is disposed on the side of the bus ring 11W opposed to the side provided with the neutral bus ring 11C. In the bus ring 11V, small-diameter positioning holes 15C are provided at positions corresponding to the intermediate-diameter positioning holes 15B in the bus ring 11W, and intermediate-diameter positioning holes 15B are provided at positions corresponding to the small-diameter positioning holes 15C in the bus ring 11W. In other words, a positional relationship of the positioning holes 15B and 15C is inverted between the bus ring 11W and the bus ring 11V. Furthermore, the bus ring 11U is disposed on the bus ring 11V on the opposite side from the neutral bus ring 11C. In the bus ring 11U, large-diameter positioning holes 15A are provided at positions corresponding to the intermediate-diameter positioning holes 15B provided in the bus ring 11V. Specifically, the bus ring 11U includes the large-diameter positioning holes 15A at the same pitch as that of the positioning holes 15A in the neutral bus ring 11C. However, the positioning holes 15A included in the bus ring 11U are shifted from the positioning holes 15A in the neutral bus ring 11C by half the pitch.

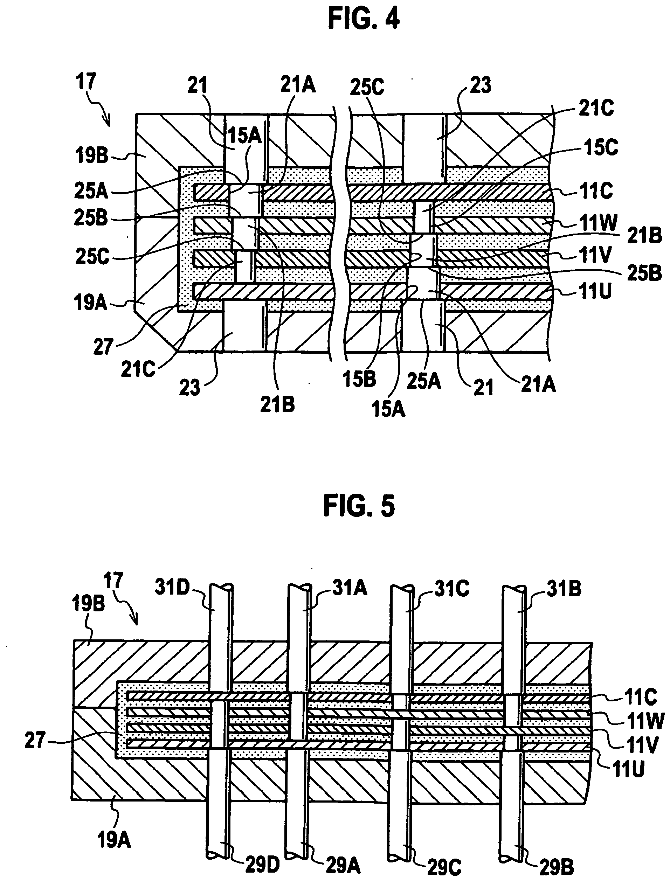

As shown in FIG. 4, the bus rings 11U, 11V, 11W and 11C are mounted as the insert in an insert molding mold (molding mold) 17 as described below. Specifically, a large-diameter portion 21A of a holding pin 21 provided in one fixed or movable mold 19A of the insert mold 17 is inserted into each large-diameter positioning hole 15A in the bus ring 11U. Accordingly, the bus ring 11U is appropriately positioned by a large-diameter positioning step portion 25A formed between the holding pin 21 body and the large-diameter portion 21A. Note that the 1/2 pitch positions of the bus ring 11U are supported by auxiliary pins 23.

The holding pins 21 are arranged concyclically at the uniform pitch so as to correspond to the large-diameter positioning holes 15A in the bus ring 11U. The auxiliary pins 23 are arranged so as to correspond to the positioning holes 15A in the neutral bus ring 11C. Specifically, the holding pins 21 and the auxiliary pins 23 are arranged alternately and concyclically at 1/2 of the pitch.

After the bus ring 11U is positioned as described above, each intermediate-diameter positioning hole 15B in the bus ring 11V is engaged with an intermediate-diameter portion 21B of the corresponding holding pin 21. Accordingly, the bus ring 11V is appropriately positioned by an intermediate-diameter positioning step portion 25B between the large-diameter portion 21A and the intermediate-diameter portion 21B of each holding pin 21. Specifically, the interval between the bus rings 11U and 11V is maintained at a previously set interval.

Next, each small-diameter positioning hole 15C in the bus ring 11W is engaged with a small-diameter portion 21C of the corresponding holding pin 21. Accordingly, the bus ring 11W is appropriately positioned by a small-diameter positioning step portion 25C formed between the intermediate-diameter portion 21B and the small-diameter portion 21C. Thus, the interval between the bus rings 11V and 11W is maintained at the previously set interval. Moreover, the neutral bus ring 11C is appropriately positioned by placing the ring on the tip surfaces of the respective holding pins 21.

In the other mold 19B of the insert molding mold 17, auxiliary pins 23 are provided so as to correspond to (face) the holding pins 21 provided in the one mold 19A, and holding pins 21A are provided so as to correspond to the auxiliary pins 23 provided in the one mold 19A. Therefore, when the one mold 19A and the other mold 19B are joined after positioning of the bus rings 11U, 11V, 11W and 11C is performed as described above, the neutral bus ring 11C is sandwiched between a tip of each holding pin 21 provided in the one mold 19A and the corresponding auxiliary pin 23 provided in the other mold 19B. At the same time, the neutral bus ring 11C and the bus rings 11W and 11V are positioned respectively by large-diameter positioning step portions 25A, intermediate-diameter positioning step portions 25B and small-diameter positioning step portions 25C, which are provided in the other mold 19B. Moreover, the bus ring 11U is sandwiched between each auxiliary pin 23 provided in the one mold 19A and a tip (tip surface) of the corresponding holding pin 21A provided in the other mold 19B.

The bus rings 11U, 11V, 11W and 11C are held so as to be equally spaced apart by the previously set interval. Each of the bus rings 11U, 11V, 11W and 11C is supported by the holding pins 21 in a manner that each holding pin 21 provided in the one mold 19A and each holding pin 21 provided in the other mold 19B are respectively in contact with the surfaces opposite to each other in an alternate fashion. Thus, the bus rings 11U, 11V, 11W and 11C are held with axial movement thereof restricted.

For this reason, the positions of the bus rings 11U, 11V, 11W and 11C is not displaced by a flow of the mold resin when the mold resin is injected into a cavity 27 formed by joining the one mold 19A and the other mold 19B. Accordingly, insert molding can be performed with the intervals between the bus rings 11U, 11V, 11W and 11C being maintained at the previously set interval. Thus, the conventional problems described above can be resolved.

The present invention is not limited to the embodiment described above but can be implemented in other forms by making appropriate changes thereto. For example, as shown in FIG. 5, holding pins 29A to 29D for supporting the bus rings 11U, 11V, 11W and 11C with their tips, respectively, are provided to the one mold 19A. Moreover, multiple holding pins 31A to 31D for holding the bus rings 11U, 11V, 11W and 11C with the holding pins 29A to 29D, respectively, are provided in the other mold 19B. This configuration can also provide a similar effect to that of the embodiment described above. However, in this configuration, each of the bus rings 11V and 11W, which are positioned in the middle, is supported by being sandwiched from both sides at points arranged at larger intervals than in the above-described embodiment, for example. Thus, the configuration of the embodiment described above is more preferable than the configuration shown in FIG. 5.

A protrusion length of the holding pin into the cavity 27 in the mold 17 can be set to various sizes. Moreover, the number of positioning step portions to be provided in the holding pin can be set to any number.

Moreover, the above description was given of the case where the positioning holes are provided so as to be equally spaced apart in each of the bus rings 11U, 11V, 11W and 11C. However, the positioning holes do not always have to be provided so as to be equally spaced apart. That is, the present invention can also employ a configuration in which positioning holes are collectively provided in multiple regions, arranged in a circumferential direction, of each of the bus rings 11U, 11V, 11W and 11C. To sum up, the positioning holes may be formed at positions that allow the holding pins 21 to be inserted into the positioning holes when the bus rings 11U, 11V, 11W and 11C are stacked.

Furthermore, instead of the configuration having the holding pins 21 provided in the molds 19A and 19B, the present invention can also employ a configuration in which the bus rings 11U, 11V, 11W and 11C are previously stacked by using the holding pins 21 and the stacked bus rings are set in the mold.

## Claims

1. A method for insert molding a terminal (1) for a brushless motor, the method comprising:
preparing four ring-shaped bus rings (11U, 11V, 11W, 11C) each having a predetermined number of positioning holes (15A, 15B, 15C) arranged in a circumferential direction of the bus ring (11U, 11V, 11W, 11C);
**characterised by**
preparing a plurality of holding pins (21; 29A-29D; 31A-31D) each having positioning step portions (25A, 25B, 25C) having mutually different diameters and arranged at predetermined intervals in an axial direction of the holding pin (21; 29A-29D; 31A-31D) so that the smaller diameters are positioned closer to a tip of the holding pin (21; 29A-29D; 31A-31D);
stacking the four bus rings (11U, 11V, 11W, 11C) at predetermined intervals in axial directions of the bus rings (11U, 11V, 11W, 11C) by inserting the holding pins (21) into the positioning holes (15A, 15B, 15C) of the bus rings (11U, 11V, 11W, 11C) and by placing corresponding bus rings of the four bus rings (11U, 11V, 11W, 11C) on tip surfaces of respective holding pins (21; 29A-29D; 31A-31D) so that diameters of the positioning holes (15A, 15B, 15C) of the stacked bus rings (11U, 11V, 11W, 11C) correspond with the diameters of the positioning step portions (25A, 25B, 25C) of the holding pins (21; 29A-29D; 31A-31D) at each axial position of the holding pins (21; 29A-29D; 31A-31D); and
integrating the bus rings (11U, 11V, 11W, 11C) with a mold resin in a state where the bus rings (11U, 11V, 11W, 11C) are held at the predetermined intervals in the axial directions of the bus rings (11U, 11V, 11W, 11C) by the tip and the positioning step portions (25A, 25B, 25C) of the respective holding pins (21; 29A-29D; 31A-31D).

2. The method for insert molding a terminal for a brushless motor according to claim 1, wherein the holding pins (21) are inserted into the positioning holes (15A, 15B, 15C) of the bus rings (11U, 11V, 11W, 11C) in a manner that insertion directions of each adjacent two of the holding pins (21) are opposite to each other with respect to the bus rings (11U, 11V, 11W, 11C).

3. The method for insert molding a terminal for a brushless motor according to claim 1 or 2, the method further comprising:
preparing auxiliary pins (23) respectively facing the tips of the holding pins (21),
wherein the bus rings (11U, 11V, 11W, 11C) are integrated with the mold resin in a state where both front and back surfaces of at least one of the bus rings (11U, 11V, 11W, 11C) are sandwiched between each facing pair of the auxiliary pins (23) and the tips of the holding pins (21).

4. The method for insert molding a terminal for a brushless motor according to claim 1 or 2,further comprising:
preparing auxiliary pins (23) provided to an insert molding mold (17) and respectively facing the tips of the holding pins (21),
wherein the bus rings (11U, 11V, 11W, 11 C) are integrated with the mold resin in a state where both front and back surfaces of at least one of the bus rings (11U, 11V, 11W, 11C) are sandwiched between each facing pair of the auxiliary pins (23) and the tips of the holding pins (21).

5. The method for insert molding a terminal for a brushless motor according to any one of claims 1 to 4, the step of preparing the holding pins (21; 29A-29D; 31A-31D) includes preparing the holding pins (21; 29A-29D; 31A-31D) provided to an insert molding mold (17).

6. The method for insert molding a terminal for a brushless motor according to claim 1 or 2, further comprising:
preparing the holding pins (21) provided to any one of a first fixed mold (19A, 19B) and a second movable mold (19B, 19A) of an insert molding mold (17); and
preparing auxiliary pins (23) provided to any one of a first fixed mold (19A, 19B) and a second movable mold (19B, 19A) of an insert molding mold (17),
wherein the bus rings (11U, 11V, 11W, 11C) are integrated with the mold resin in a state where both front and back surfaces of at least one of the bus rings (11U, 11V, 11W, 11C) are sandwiched between each facing pair of the auxiliary pins (23) and the tips of the holding pins (21).

7. A terminal (1) for a brushless motor, the terminal (1) comprising:
a terminal main body (3) formed of a mold resin so as to have a circular outer peripheral surface; and
a plurality of ring-shaped bus rings (11U, 11V, 11W, 11C) buried in the terminal main body (3), the bus rings (11U, 11V, 11W, 11 C) each having a predetermined number of positioning holes (15A, 15B, 15C) arranged in a circumferential direction of the bus ring (11U, 11V, 11W, 11C),
**characterised in that** the bus rings (11U, 11V, 11W, 11C) are stacked at predetermined intervals in axial directions of the bus rings (11U, 11V, 11W, 11C) by inserting a plurality of holding pins (21; 29A-29D; 31A-31D) into the positioning holes (15A, 15B, 15C) of the bus rings (11U, 11V, 11W, 11C), each holding pin (21; 29A-29D; 31A-31D) having positioning step portions (25A, 25B, 25C) having mutually different diameters and arranged at predetermined intervals in an axial direction of the holding pin (21; 29A-29D; 31A-31D) so that the smaller diameters are positioned closer to a tip of the holding pin (21; 29A-29D; 31A-31D), and
the bus rings (11U, 11V, 11W, 11C) are integrated with a mold resin in a state where the bus rings (11U, 11V, 11W, 11C) are held at the predetermined intervals in the axial directions of the bus rings (11U, 11V, 11W, 11C) by the tip and the positioning step portions (25A, 25B, 25C) of the respective holding pins (21; 29A-29D; 31A-31D).

8. The terminal (1) for a brushless motor according to claim 7,
wherein the bus rings (11U, 11V, 11W, 11C) are stacked by inserting the holding pins (21) into the positioning holes (15A, 15B, 15C) of the bus rings (11U, 11V, 11W, 11 C) in a manner that insertion directions of each adjacent two of the holding pins (21) are opposite to each other with respect to the bus rings (11 U, 11V, 11W, 11C).

9. The terminal (1) for a brushless motor according to claim 7 or 8, wherein auxiliary pins (23) respectively facing the tips of the holding pins (21) are prepared,
and
the bus rings (11U, 11V, 11W, 11C) are integrated with the mold resin in a state where both front and back surfaces of at least one of the bus rings (11 U, 11V, 11W, 11 C) are sandwiched between each facing pair of the auxiliary pins (23) and the tips of the holding pins (21).

10. The terminal (1) for a brushless motor according to claim 9,
wherein the auxiliary pins (23) are provided to an insert molding mold (17).

11. The terminal (1) for a brushless motor according to any one of claims 7 to 10, wherein the holding pins (21; 29A-29D; 31A-31D) are provided to an insert molding mold (17).

12. The terminal (1) for a brushless motor according to claim 9,
wherein the holding pins (21) and the auxiliary pins (23) are provided to any one of a first fixed mold (19A, 19B) and a second movable mold (19B, 19A) of an insert molding mold (17).

## Patentansprüche

1. Insert-Molding-Verfahren für einen Anschluss (1) für einen bürstenlosen Motor, wobei das Verfahren umfasst:
Fertigen vier ringförmiger Bus-Ringe (11U, 11V, 11W, 11C), die jeweils eine vorgegebene Anzahl von Positionier-Löchern (15A, 15B, 15C) haben, die in einer Umfangsrichtung des Bus-Rings (11U, 11V, 11W, 11C) angeordnet sind;
**gekennzeichnet durch**
Fertigen einer Vielzahl von Halte-Stiften (21; 29A-29D; 31A-31 D), die jeweils positionierende Absatzabschnitte (25A, 25B, 25C) aufweisen, die voneinander verschiedene Durchmesser haben und in vorgegebenen Abständen in einer axialen Richtung des Halte-Stiftes (21; 29A-29D; 31A-31D) so angeordnet sind, dass sich die kleineren Durchmesser näher an einem vorderen Ende des Halte-Stiftes (21; 29A-29D; 31 A-31 D) befinden;
Übereinanderschichten der vier Bus-Ringe (11U, 11V, 11W, 11C) in vorgegebenen Abständen in axialen Richtungen der Bus-Ringe (11U, 11V, 11W, 11C) durch Einführen der Halte-Stifte (21) in die Positionier-Löcher (15A, 15B, 15C) der Bus-Ringe (11U, 11 V, 11W, 11 C) und durch Positionieren entsprechender Bus-Ringe der vier Bus-Ringe (11 U, 11 V, 11W, 11C) an vorderen Flächen der jeweiligen Halte-Stifte (21; 29A-29D; 31 A-31 D), so dass Durchmesser der Positionier-Löcher (15A, 15B, 15C) der übereinandergeschichteten Bus-Ringe (11U, 11V, 11W, 11C) den Durchmessern der positionierenden Absatzabschnitte (25A, 25B, 25C) der Halte-Stifte (21; 29A-29D; 31A-31 D) an jeder axialen Position der Halte-Stifte (21; 29A-29D; 31A-31D) entsprechen; und
integrales Verbinden der Bus-Ringe (11 U, 11V, 11W, 11 C) mit einem Form-Kunststoff in einem Zustand, in dem die Bus-Ringe (11U, 11V, 11W, 11C) durch das vordere Ende und die positionierenden Absatzabschnitte (25A, 25B, 25C) der jeweiligen Halte-Stifte (21; 29A-29D; 31A-31 D) in vorgegebenen Abständen in den axialen Richtungen der Bus-Ringe (11U, 11V, 11W, 11 C) gehalten werden.

2. Insert-Molding-Verfahren für einen Anschluss für einen bürstenlosen Motor nach Anspruch 1, wobei die Halte-Stifte (21) so in die Positionier-Löcher (15A, 15B, 15C) der Bus-Ringe (11U, 11V, 11W, 11C) eingeführt werden, dass Einführrichtungen jeweils zweier benachbarter der Halte-Stifte (21) einander in Bezug auf die Bus-Ringe (11U, 11V, 11W, 11C) gegenüberliegen.

3. Insert-Molding-Verfahren für einen Anschluss für einen bürstenlosen Motor nach Anspruch 1 oder 2, wobei das Verfahren des Weiteren umfasst:
Fertigen von Hilfs-Stiften (23), die jeweils den vorderen Enden der Halte-Stifte (21) zugewandt sind,
wobei die Bus-Ringe (11 U, 11V, 11W, 11 C) mit dem Form-Kunststoff in einem Zustand integral verbunden werden, in dem sowohl eine vordere als auch eine hintere Fläche wenigstens eines der Bus-Ringe (11 U, 11V, 11W, 11 C) zwischen jedem einander zugewandten Paar der Hilfs-Stifte (23) und der vorderen Enden der Halte-Stifte (21) eingeschlossen sind.

4. Insert-Molding-Verfahren für einen Anschluss für einen bürstenlosen Motor nach Anspruch 1 oder 2, das des Weiteren umfasst:
Fertigen von Hilfs-Stiften (23), die sich an einer Insert-Molding-Form (17) befinden und jeweils den vorderen Enden der Halte-Stifte (21) zugewandt sind,
wobei die Bus-Ringe (11 U, 11V, 11W, 11 C) mit dem Form-Kunststoff in einem Zustand integral verbunden werden, in dem sowohl eine vordere als auch eine hintere Fläche wenigstens eines der Bus-Ringe (11 U, 11V, 11W, 11 C) zwischen jedem einander zugewandten Paar der Hilfs-Stifte (23) und der vorderen Enden der Halte-Stifte (21) eingeschlossen sind.

5. Insert-Molding-Verfahren für einen Anschluss für einen bürstenlosen Motor nach einem der Ansprüche 1 bis 4, wobei der Schritt des Fertigens der Halte-Stifte (21; 29A-29D; 31A-31D) einschließt, dass die Halte-Stifte (21; 29A-29D; 31A-31D) gefertigt werden, die sich an einer Insert-Molding-Form (17) befinden.

6. Insert-Molding-Verfahren für einen Anschluss für einen bürstenlosen Motor nach Anspruch 1 oder 2, das des Weiteren umfasst:
Fertigen der Halte-Stifte (21), die sich an einem beliebigen von einem ersten, stationären Formwerkzeug (19A, 19B) und einem zweiten, beweglichen Formwerkzeug (19B, 19A) einer Insert-Molding-Form (17) befinden; und
Fertigen von Hilfs-Stiften (21), die sich an einem beliebigen von einem ersten, stationären Formwerkzeug (19A, 19B) und einem zweiten, beweglichen Formwerkzeug (19B, 19A) einer Insert-Molding-Form (17) befinden,
wobei die Bus-Ringe (11 U, 11V, 11W, 11 C) mit dem Form-Kunststoff in einem Zustand integral verbunden werden, in dem sowohl eine vordere als auch eine hintere Fläche wenigstens eines der Bus-Ringe (11 U, 11V, 11W, 11 C) zwischen jedem einander zugewandten Paar der Hilfs-Stifte (23) und der vorderen Enden der Halte-Stifte (21) eingeschlossen sind.

7. Anschluss (1) für einen bürstenlosen Motor, wobei der Anschluss (1) umfasst:
einen Anschluss-Hauptkörper (3), der aus einem Form-Kunststoff so ausgebildet wird, dass er eine kreisförmige Außenumfangsfläche hat; und
eine Vielzahl ringförmiger Bus-Ringe (11U, 11V, 11W, 11C), die in dem Anschluss-Hauptkörper (3) vergraben sind, wobei die Bus-Ringe (11U, 11V, 11W, 11C) jeweils eine vorgegebene Anzahl von Positionier-Löchern (15A, 15B, 15C) haben, die in einer Umfangsrichtung des Bus-Rings (11U, 11V, 11W, 11 C) angeordnet sind,
**dadurch gekennzeichnet, dass**
die Bus-Ringe (11 U, 11V, 11W, 11 C) in vorgegebenen Abständen in axialen Richtungen der Bus-Ringe (11 U, 11V, 11W, 11 C) übereinandergeschichtet werden, indem eine Vielzahl von Halte-Stiften (21; 29A-29D; 31A-31D) in die Positionier-Löcher (15A, 15B, 15C) der Bus-Ringe (11 U, 11V, 11W, 11 C) eingeführt werden, wobei jeder Halte-Stift (21; 29A-29D; 31A-31 D) positionierende Absatzabschnitte (25A, 25B, 25C) aufweist, die voneinander verschiedene Durchmesser haben und in vorgegebenen Abständen in einer axialen Richtung des Halte-Stiftes (21; 29A-29D; 31A-31D) so angeordnet sind, dass sich die kleineren Durchmesser näher an einem vorderen Ende des Halte-Stiftes (21; 29A-29D; 31A-31D) befinden, und
die Bus-Ringe (11U, 11V, 11W, 11C) mit einem Form-Kunststoff in einem Zustand integral verbunden werden, in dem die Bus-Ringe (11 U, 11V, 11W, 11C) durch das vordere Ende und die positionierenden Absatzabschnitte (25A, 25B, 25C) der jeweiligen Halte-Stifte (21; 29A-29D; 31A-31D) in vorgegebenen Abständen in den axialen Richtungen der Bus-Ringe (11 U, 11V, 11W, 11 C) gehalten werden.

8. Anschluss (1) für einen bürstenlosen Motor nach Anspruch 7,
wobei die Bus-Ringe (11 U, 11V, 11W, 11 C) übereinandergeschichtet werden, indem die Halte-Stifte (21) so in die Positionier-Löcher (15A, 15B, 15C) der Bus-Ringe (11U, 11V, 11W, 11 C) eingeführt werden, dass Einführrichtungen jeweils zweier benachbarter der Halte-Stifte (21) einander in Bezug auf die Bus-Ringe (11 U, 11V, 11W, 11 C) gegenüberliegen.

9. Anschluss (1) für einen bürstenlosen Motor nach Anspruch 7 oder 8, wobei
Hilfs-Stifte (23) gefertigt werden, die jeweils den vorderen Enden der Halte-Stifte (21) zugewandt sind,
und die Bus-Ringe (11U, 11V, 11W, 11C) mit dem Form-Kunststoff in einem Zustand integral verbunden werden, in dem sowohl eine vordere als auch eine hintere Fläche wenigstens eines der Bus-Ringe (11U, 11V, 11W, 11C) zwischen jedem einander zugewandten Paar der Hilfs-Stifte (23) und der vorderen Enden der Halte-Stifte (21) eingeschlossen sind.

10. Anschluss (1) für einen bürstenlosen Motor nach Anspruch 9,
wobei sich die Hilfs-Stifte (23) an einer Insert-Molding-Form (17) befinden.

11. Anschluss (1) für einen bürstenlosen Motor nach einem der Ansprüche 7 bis 10,
wobei sich die Halte-Stifte (21; 29A-29D; 31A-31D) an einer Insert-Moulding-Form (17) befinden.

12. Anschluss (1) für einen bürstenlosen Motor nach Anspruch 9,
wobei sich die Halte-Stifte (21) und die Hilfs-Stifte (23) an einem beliebigen von einem ersten, stationären Formwerkzeug (19A, 19B) und einem zweiten, beweglichen Formwerkzeug (19B, 19A) einer Insert-Molding-Form (17) befinden.

## Revendications

1. Procédé de moulage par insertion d'une borne (1) pour moteur sans balais, le procédé comprenant :
la préparation de quatre bagues de bus annulaires. (11U, 11V, 11W, 11C) ayant chacune un nombre prédéterminé de trous de positionnement (15A, 15B, 15C) agencés dans une direction circonférentielle de la bague de bus (11U, 11V, 11W, 11C) ;
**caractérisé par**
la préparation d'une pluralité de broches de maintien (21 ; 29A-29D ; 31A-31D) comportant chacune des portions d'échelon de positionnement (25A, 25B, 25C) ayant des diamètres mutuellement différents et agencées à des intervalles prédéterminés en direction axiale de la broche de maintien (21 ; 29A-29D ; 31A-31D) de telle sorte que les diamètres plus petits sont positionnés plus près d'une pointe de la broche de maintien (21 ; 29A-29D ; 31A-31D) ;
l'empilement des quatre bagues de bus (11U, 11V, 11W, 11C) à des intervalles prédéterminés dans des directions axiales des bagues de bus (11U, 11V, 11W, 11C) par insertion des broches de maintien (21) dans les trous de positionnement (15A, 15B, 15C) des bagues de bus (11U, 11V, 11W, 11C) et par agencement de bagues de bus correspondantes des quatre bagues de bus (11U, 11V, 11W, 11C) sur des surfaces de pointe de broches de maintien respectives (21 ; 29A-29D ; 31A-31D) de telle sorte que les diamètres des trous de positionnement (15A, 15B, 15C) des bagues de bus empilées (11U, 11V, 11W, 11C) correspondent aux diamètres des portions d'échelon de positionnement (25A, 25B, 25C) des broches de maintien (21 ; 29A-29D ; 31A-31D) à chaque position axiale des broches de maintien (21 ; 29A-29D ; 31A-31D) ; et
l'intégration des bagues de bus (11U, 11V, 11W, 11C) avec une résine de moulage dans un état où les bagues de bus (11U, 11V, 11W, 11C) sont maintenues aux intervalles prédéterminés dans les directions axiales des bagues de bus (11U, 11V, 11W, 11C) par la pointe et les portions d'échelon de positionnement (25A, 25B, 25C) des broches de maintien respectives (21 ; 29A-29D ; 31A-31D).

2. Procédé de moulage par insertion d'une borne pour moteur sans balais selon la revendication 1, dans lequel les broches de maintien (21) sont insérées dans les trous de positionnement (15A, 15B, 15C) des bagues de bus (11U, 11V, 11W, 11C) de manière à ce que des directions d'insertion de chaque paire de broches de maintien adjacentes (21) soient opposées entre elles par rapport aux bagues de bus (11U, 11V, 11W, 11C).

3. Procédé de moulage par insertion d'une borne pour moteur sans balais selon la revendication 1 ou 2, le procédé comprenant en outre :
la préparation de broches auxiliaires (23) faisant respectivement face aux pointes des broches de maintien (21),
dans lequel les bagues de bus (11U, 11V, 11W, 11C) sont intégrées avec la résine de moulage dans un état où les surfaces avant et arrière d'au moins une des bagues de bus (11U, 11V, 11W, 11C) sont intercalées entre les broches de chaque paire de broches auxiliaires (23) qui se font face et les pointes des broches de maintien (21).

4. Procédé de moulage par insertion d'une borne pour moteur sans balais selon la revendication 1 ou 2, comprenant en outre :
la préparation de broches auxiliaires (23) pourvues dans un moule de moulage par insertion (17) et faisant respectivement face aux pointes des broches de maintien (21),
dans lequel les bagues de bus (11U, 11V, 11W, 11C) sont intégrées avec la résine de moulage dans un état où les surfaces avant et arrière d'au moins une des bagues de bus (11U, 11V, 11W, 11C) sont intercalées entre les broches de chaque paire de broches auxiliaires (23) qui se font face et les pointes des broches de maintien (21).

5. Procédé de moulage par insertion d'une borne pour moteur sans balais selon l'une quelconque des revendications 1 à 4, dans lequel l'étape de préparation des broches de maintien (21 ; 29A-29D ; 31A-31D) comprend la préparation des broches de maintien (21 ; 29A-29D ; 31A-31D) pourvues dans un moule de moulage par insertion (17).

6. Procédé de moulage par insertion d'une borne pour moteur sans balais selon la revendication 1 ou 2, comprenant en outre :
la préparation des broches de maintien (21) pourvues dans un moule quelconque parmi un premier moule fixe (19A, 19B) et un deuxième moule mobile (19B, 19A) d'un moule de moulage par insertion (17) ; et
la préparation de broches auxiliaires (23) pourvues dans un moule quelconque parmi un premier moule fixe (19A, 19B) et un deuxième moule mobile (19B, 19A) d'un moule de moulage par insertion (17),
dans lequel les bagues de bus (11U, 11V, 11W, 11C) sont intégrées avec la résine de moulage dans un état où les surfaces avant et arrière d'au moins une des bagues de bus (11U, 11V, 11W, 11C) sont intercalées entre les broches de chaque paire de broches auxiliaires (23) qui se font face et les pointes des broches de maintien (21).

7. Borne (1) pour moteur sans balais, le borne (1) comprenant :
un corps principal de borne (3) formé à partir d'une résine de moulage de manière à avoir une surface périphérique externe circulaire ; et
une pluralité de bagues de bus annulaires (11U, 11V, 11W, 11C) noyées dans le corps principal de borne (3), les bagues de bus (11U, 11V, 11W, 11C) ayant chacune un nombre prédéterminé de trous de positionnement (15A, 15B, 15C) agencés dans une direction circonférentielle de la bague de bus (11U, 11V, 11W, 11C),
**caractérisée en ce que**
les bagues de bus (11U, 11V, 11W, 11C) sont empilées à intervalles prédéterminés dans des directions axiales des bagues de bus (11U, 11V, 11W, 11C) en insérant une pluralité de broches de maintien (21 ; 29A-29D ; 31A-31D) dans les trous de positionnement (15A, 15B, 15C) des bagues de bus (11U, 11V, 11W, 11C), chaque broche de maintien (21 ; 29A-29D ; 31A-31D) comportant des portions d'échelon de positionnement (25A, 25B, 25C) ayant des diamètres mutuellement différents et agencées à des intervalles prédéterminés en direction axiale de la broche de maintien (21 ; 29A-29D ; 31A-31D) de telle sorte que les diamètres plus petits sont positionnés plus près d'une pointe de la broche de maintien (21 ; 29A-29D ; 31A-31D), et
les bagues de bus (11U, 11V, 11W, 11C) sont intégrées avec une résine de moulage dans un état où les bagues de bus (11U, 11V, 11W, 11C) sont maintenues à des intervalles prédéterminés dans les directions axiales des bagues de bus (11U, 11V, 11W, 11C) par la pointe et les portions d'échelon de positionnement (25A, 25B, 25C) des broches de maintien respectives (21 ; 29A-29D ; 31A-31D).

8. Borne (1) pour moteur sans balais selon la revendication 7,
dans laquelle les broches de maintien (11U, 11V, 11W, 11C) sont empilées en insérant les broches de maintien (21) dans les trous de positionnement (15A, 15B, 15C) des bagues de bus (11U, 11V, 11W, 11C) de manière à ce que des directions d'insertion de chaque paire de broches de maintien adjacentes (21) soient opposées entre elles par rapport aux bagues de bus (11U, 11V, 11W, 11C).

9. Borne (1) pour moteur sans balais selon la revendication 7 ou 8, dans laquelle
des broches auxiliaires (23) faisant respectivement face aux pointes des broches de maintien (21) sont préparées, et
les bagues de bus (11U, 11V, 11W, 11C) sont intégrées avec la résine de moulage dans un état où les surfaces avant et arrière d'au moins une des bagues de bus (11U, 11V, 11W, 11C) sont intercalées entre les broches de chaque paire de broches auxiliaires (23) qui se font face et les pointes des broches de maintien (21).

10. Borne (1) pour moteur sans balais selon la revendication 9,
dans laquelle les broches auxiliaires (23) sont pourvues dans un moule de moulage par insertion (17).

11. Borne (1) pour moteur sans balais selon l'une quelconque des revendications 7 à 10, dans laquelle les broches de maintien (21 ; 29A-29D ; 31A-31D) sont pourvues dans un moule de moulage par insertion (17).

12. Borne (1) pour moteur sans balais selon la revendication 9,
dans laquelle les broches de maintien (21) et les broches auxiliaires (23) sont pourvues dans un moule quelconque parmi un premier moule fixe (19A, 19B) et un deuxième moule mobile (19B, 19A) d'un moule de moulage par insertion (17).
